# EUROPÄISCHE PATENTANMELDUNG

(11) **EP 1 529 757 A2**
(43) Veröffentlichungstag der Anmeldung: **11.05.2005**
(21) Anmeldenummer: 04026257.8
(22) Anmeldetag: 05.11.2004
(51) Int. Cl.: C02F 1/461

(54) **Wasseraufbereitungsanlage mit Elektrolysezelle**

(30) Priorität: 07.11.2003 DE 10352480
(71) Anmelder: Wassertechnik Wertheim GmbH & Co.KG, 97877 Wertheim (DE)
(72) Erfinder: Karl, Reinhard, 4600 Weis (AT); Elgg, Jürgen, 97082 Würzburg (DE)
(74) Vertreter: von den Steinen, Axel, Dipl.-Ing.

(57) **Zusammenfassung**

Die Erfindung betrifft eine Wasseraufbereitungsanlage, insbesondere für ein Schwimmbad, mit einer Reinigungseinheit (07), in der das insbesondere aus einem Schwimmbecken (01) abgezogene Schmutzwasser (03) aufbereitet wird, wobei bei der Aufbereitung in der Reinigungseinheit (07) das Schmutzwasser (03) in gereinigtes Brauchwasser und mit Verunreinigungen aufkonzentriertes Schlammwasser (08) getrennt wird, und mit einer Schlammwasseraufbereitungsanlage (05), in der das Schlammwasser (08) aufbereitet wird, wobei bei der Aufbereitung des Schlammwassers (08) Feststoffe abgefiltert werden und/oder im Schlammwasser (08) gelöste Verunreinigungen entfernt werden und/oder im Schlammwasser (08) enthaltene Biomasse abgetötet wird und/oder das Schlammwasser (08) entsalzt wird. In der Schlammwasseraufbereitungsanlage (05) ist zumindest eine Elektrolysezelle (14) mit zumindest einer Anode und zumindest einer Katode vorgesehen, so dass das Schlammwasser (08) bei Durchleitung durch die Elektrolysezelle (14) und Anlegen einer elektrischen Spannung zwischen Anode und Katode einem Elektrolyseprozess unterworfen werden kann.

## Beschreibung

Die Erfindung betrifft eine Wasseraufbereitungsanlage nach dem Oberbegriff des Anspruchs 1.

Derartige Wasseraufbereitungsanlagen werden insbesondere zur Wasseraufbereitung in Schwimmbädern eingesetzt. Aufgrund von Verschmutzungen, die durch die Besucher eines Schwimmbades in das Schwimmwasser eingetragen werden, muss das in einem Schwimmbecken enthaltene Schwimmwasser permanent aus dem Schwimmbecken abgezogen und durch geeignete Aufbereitung gereinigt werden. In der ersten Stufe der Wasseraufbereitung steht dazu eine Reinigungseinheit zur Verfügung, in der das Schmutzwasser zunächst in gereinigtes Brauchwasser und mit Verunreinigungen aufkonzentriertes Schlammwasser getrennt wird. Die Bauart der Reinigungseinheit ist dabei grundsätzlich beliebig. Das gereinigte Brauchwasser wird zurück in das Schwimmbecken gepumpt, wohingegen das abgetrennte Schlammwasser in einer nachgeordneten Schlammwasseraufbereitungsanlage durch geeignete Aufbereitung gereinigt wird. Der Begriff Schlammwasser ist dabei nicht so zu verstehen, dass es sich um eine dickflüssige, verschlammte Flüssigkeit handelt.

Vielmehr besteht das Schlammwasser zu einem sehr großen Anteil aus Wasser, in dem die in der Reinigungseinheit abgetrennten Verunreinigungen aufkonzentriert sind.

In der nachgeordneten Schlammwasseraufbereitungsanlage werden die im Schlammwasser enthaltenen Feststoffe abgefiltert, die im Schlammwasser gelösten Verunreinigungen entfernt, die im Schlammwasser enthaltene Biomasse, beispielsweise Bakterien oder Viren, abgetötet und/oder das Schlammwasser entsalzt. Üblicherweise sind in bekannten Schlammwasseraufbereitungsanlagen zur Erfüllung dieser Funktion Membranen zur Abfilterung von im Schlammwasser enthaltenen Feststoffen vorgesehen.

Versuche an bekannten Wasseraufbereitungsanlagen haben gezeigt, dass eine Vielzahl von Problemen durch die eingesetzten Membranfilter verursacht wird. Denn die bekannten Membranfilter haben den Nachteil, dass sie relativ störanfällig sind und zugleich nur schwer in ihrer Funktion überwacht werden können. Dies führt dazu, dass bei unzureichender Funktion des Membranfilters, beispielsweise durch Bildung eines Lochs in der Reinigungsmembran, Verunreinigungen unbemerkt die Schlammwasseraufbereitungsanlage durchlaufen. Dadurch besteht potenziell die Gefahr, dass das gereinigte Schlammwasser eine unzulässig hohe Anzahl von Verunreinigungen, beispielsweise Krankheitserregern, enthält. Außerdem sind die Investitions- und Betriebskosten und der Wartungsaufwand bei Membrananlagen sehr hoch.

Ausgehend von diesem Stand der Technik ist es deshalb Aufgabe der vorliegenden Erfindung, eine neue Wasseraufbereitungsanlage vorzuschlagen, mit der bei geringeren Kosten ein verbessertes Wasseraufbereitungsergebnis erzielt werden kann.

Diese Aufgabe wird durch eine Wasseraufbereitungsanlage nach der Lehre des Anspruchs 1 gelöst.

Vorteilhafte Ausführungsformen der Erfindung sind Gegenstand der Unteransprüche.

Die erfindungsgemäße Wasseraufbereitungsanlage beruht auf dem Grundgedanken, dass in der Schlammwasseraufbereitungsanlage zumindest eine Elektrolysezelle mit zumindest einer Anode und zumindest einer Katode vorgesehen ist. Beim Durchleiten des Schlammwassers durch die Elektrolysezelle kann dann das Schlammwasser durch Anlegen einer elektrischen Spannung zwischen Anode und Katode einem Elektrolyseprozess unterworfen werden. Bei geeigneter Führung des Elektrolyseprozesses können verschiedene zur Reinigung und Aufbereitung des Schlammwassers erwünschte Effekte erzielt werden. So ist es insbesondere möglich, die im Schlammwasser enthaltene Biomasse abzutöten und den in organischen Verbindungen enthaltenen Kohlenstoff zu Kohlendioxid zu oxidieren. Weiter werden die im Schlammwasser enthaltenen chlorhaltigen Verbindungen, insbesondere Chlorid, an der Anode zu freiem Chlor reduziert. Durch diesen Effekt der Bildung von freiem Chlor im Schlammwasser kann eine zusätzliche Desinfektion des Schlammwassers bewirkt werden. Außerdem kann das Chlor in der Art eines Depots im Wasser gespeichert werden, so dass bei späterer Verwendung des Wassers im Schwimmbecken weniger Chlor zur Desinfektion zugegeben werden muss. Weiter werden im Schlammwasser enthaltene Stickstoffverbindungen, insbesondere Nitrat, zu Stickstoff reduziert. Im Ergebnis werden also durch den Elektrolyseprozess zum einen im Schlammwasser enthaltene Verunreinigungen unmittelbar durch chemische Umsetzung entfernt und zum anderen chemische Stoffe gebildet, die zur Desinfektion des Schlammwassers geeignet sind.

Zur zuverlässigen Funktion der Elektrolysezelle ist es erforderlich, dass diese nicht durch im Schlammwasser enthaltene Feststoffe verunreinigt wird. Nach einer bevorzugten Ausführungsform ist deshalb in der Schlammwasseraufbereitungsanlage der Elektrolysezelle ein Vorfilter zur Abfilterung von Feststoffen vorgeschaltet. Vorzugsweise sollte das gesamte Schlammwasser durch den Vorfilter durchgeleitet werden, um die Einbringung von Feststoffen in die Elektrolysezelle im Wesentlichen vollständig, d.h. beinahe zu 100 Prozent, ausschließen zu können.

Welche Bauart der Vorfilter zur Abfilterung von Feststoffen aufweist, ist grundsätzlich beliebig. Als besonders geeignet haben sich jedoch Sandfilter erwiesen, wobei der Querschnitt der Sandfilter möglichst groß sein sollte, um durch die dadurch abgesenkte Durchflussgeschwindigkeit eine möglichst gründliche Abfilterung von Feststoffen zu gewährleisten. Versuche haben gezeigt, dass der Querschnitt des Sandfilters vorzugsweise so groß sein sollte, dass eine Durchflussgeschwindigkeit von kleiner oder gleich 5 m/h im Sandfilter eingehalten wird.

Die Bauart der Elektrolysezelle zur elektrolytischen Reinigung des Schlammwassers ist grundsätzlich beliebig. Die in der Elektrolysezelle enthaltenen Anoden und Katoden sollten vorzugsweise plattenförmig ausgebildet sein, um eine möglichst große Kontaktfläche zu bilden, an der die Elektrolyseprozesse im Schlammwasser ablaufen können. Das Schlammwasser sollte dabei vorzugsweise längs der spaltförmigen Zwischenräume zwischen den Plattenanoden und Plattenkatoden durch die Elektrolysezelle durchgeleitet werden. Die Größe der Elektrodenfläche der Plattenanode und/oder der Plattenkatode sollte auf den Chloridgehalt und/oder den TOC-Gehalt abgestimmt werden. Insbesondere eine Elektrodenfläche von ungefähr 1 qm je 20 g Chlor pro Stunde hat sich als geeignet erwiesen.

Um eine hohe Effektivität der Elektrolyse zu gewährleisten, sollte der Abstand zwischen zueinander benachbarten Plattenanoden und Plattenkatoden kleiner oder gleich 4 mm, insbesondere kleiner oder gleich 2 mm, sein.

Als besonders geeignet für die Schlammwasseraufbereitung haben sich Spannungswerte zwischen Anode und Katode erwiesen, die im Bereich zwischen 5 und 20 Volt, insbesondere im Bereich zwischen 8 und 16 Volt, liegen.

Der Elektrolyseprozess wird maßgeblich von der zwischen den Anoden und Katoden angelegten Spannung beeinflusst. Um den Elektrolyseprozess im Schlammwasser geeignet beeinflussen zu können, ist es deshalb besonders vorteilhaft, wenn ein Steuer- oder Regelgerät vorgesehen ist, mit der die Spannung und/oder der Strom zwischen Anode und Katode gesteuert bzw. geregelt werden kann.

Ein Problem des elektrolytischen Reinigungsprozesses in der Elektrolysezelle ist es, dass die Anoden bzw. Katoden bei längerfristigem Betrieb durch die chemischen Umsetzungsprozesse verunreinigt bzw. durch Ablagerungen blockiert werden können. So stellen insbesondere Kalkablagerungen auf der Außenoberfläche der Anoden bzw. Katoden ein Problem dar, da durch den Kalk der direkte Kontakt zwischen dem Schlammwasser und den Katoden bzw. Anoden eingeschränkt bzw. verhindert wird. Dieses Problem kann dadurch gelöst werden, dass die Spannung zwischen Anode und Katode mit dem Steuer- oder Regelgerät periodisch umgepolt wird. Dies bedeutet mit anderen Worten, dass nach der Umpolung eine Anode als Katode bzw. eine Katode als Anode wirkt. Durch den Elektrolyseprozess verursachte Ablagerungen auf den Anoden bzw. Katoden können durch die Umpolung wieder abgebaut werden, da die chemische Reaktion nun in der umgekehrten Richtung verläuft. Die Umpolung der Spannung zwischen Anode und Katode sollte vorzugsweise automatisch erfolgen, um für eine zuverlässige Reinigung der Anoden bzw. Katoden zu sorgen. Die Dauer der Phasen zwischen der Umpolung ist auf die Wasserqualität des Schlammwassers, insbesondere auf die Härte des Schlammwassers, abzustimmen. Phasendauern im Bereich zwischen 5 bis 50 Minuten, insbesondere ungefähr 10 Minuten, haben sich als geeignet erwiesen.

Um die oben beschriebene Umpolung zwischen Anoden und Katoden zu ermöglichen, müssen die Anoden und Katoden eine Bauart aufweisen, dass sie zugleich als Anode als auch als Katode geschaltet werden können. Zur Einsparung von Baukosten sollten deshalb die Anoden und Katoden vorzugsweise im Wesentlichen baugleich ausgebildet sein und vorzugsweise aus dem gleichen Material hergestellt werden.

Als besonders geeignet haben sich Anoden bzw. Katoden erwiesen, die aus Titan hergestellt sind. Der Wirkungsgrad der Anoden bzw. Katoden kann dabei noch dadurch gesteigert werden, dass an den Anoden bzw. Katoden, die beispielsweise aus Titanplatten hergestellt sind, Diamanten, insbesondere Industriediamantpartikel, befestigt sind. Dazu können die Industriediamantpartikel beispielsweise in die Oberfläche der Titanplatten eingepresst werden.

Eine Ausführungsform der Erfindung ist in der Zeichnung dargestellt und wird nachfolgend beispielhaft erläutert.

### Es zeigt:

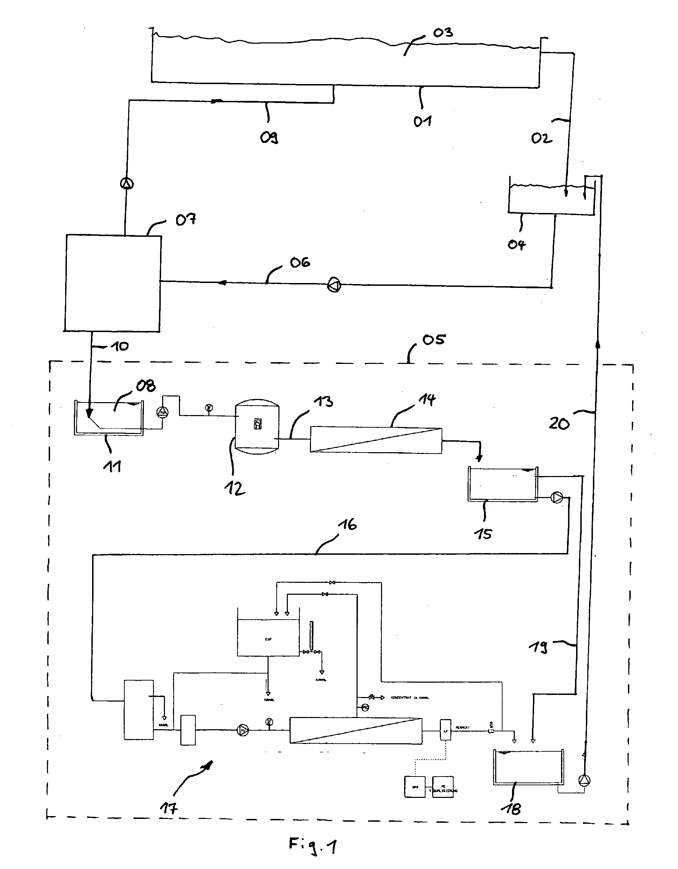

- **Fig. 1**: das Durchflussschema einer Wasseraufbereitungsanlage für ein Schwimmbad.

In **Fig. 1** ist das Durchflussschema einer Wasseraufbereitungsanlage für ein Schwimmbad schematisch dargestellt. Aus einem Schwimmbecken 01 wird durch eine Leitung 02 Schmutzwasser 03, das mit Verunreinigungen belastet ist, abgezogen. Das Schmutzwasser 03 wird in einen Zwischenspeicher 04 geleitet.

Das Wasser aus dem Zwischenspeicher 04 wird anschließend durch eine Leitung 06 in eine Reinigungseinheit 07 übergeleitet, wo es in Schlammwasser 08 und gereinigtes Brauchwasser getrennt wird. Das gereinigte Brauchwasser wird durch eine Leitung 09 zurück ins Schwimmbecken 01 gepumpt.

Das Schlammwasser 08 gelangt über eine Leitung 10 in einen Zwischenspeicher 11, der die erste Station der Schlammwasseraufbereitungsanlage 05 darstellt. Aus dem Zwischenspeicher 11 wird das Schlammwasser 08 in einen Sandfilter 12 gepumpt, wo im Wesentlichen alle Feststoffe aus dem Schlammwasser 08 abgefiltert werden.

Anschließend gelangt das nun im Wesentlichen feststofffreie Schlammwasser 08 über eine Leitung 13 in eine Elektrolysezelle 14, wo das feststofffreie Schlammwasser einem Elektrolyseprozess unterworfen wird. Durch den Elektrolyseprozess werden Mikroorganismen und Biomasse im Schlammwasser zumindest teilweise abgetötet. Außerdem wird Nitrat zu Stickstoff und Sauerstoff reduziert und im Schlammwasser enthaltene Chlorverbindungen werden zu Chlor reduziert. Aus der Elektrolysezelle 14 gelangt das nun chlorhaltige, feststofffreie und von Mikroorganismen befreite Wasser in einen Zwischenspeicher 15.

Aus dem Zwischenspeicher 15 wird ein bestimmter Anteil des chlorhaltigen, feststofffreien und mikroorganismenfreien Wassers, beispielsweise ungefähr 30 Prozent, durch eine Leitung 16 in eine nachgeordnete Entsalzungsanlage 17 übergeführt. Das in der Entsalzungsanlage 17 entsalzte Wasser gelangt anschließend in einen Zwischenspeicher 18, wo es sich mit dem übrigen Wasser aus dem Zwischenspeicher 15, das durch eine Leitung 19 direkt in den Zwischenspeicher 18 gelangt, mischt. Aus dem Zwischenspeicher 18 wird das nun feststofffreie, desinfizierte, mikroorganismenfreie, entsalzte Wasser durch eine Leitung 20 zurück zum Zwischenspeicher 04 gepumpt, wo es sich mit dem Schmutzwasser 03 aus dem Schwimmbecken 01 mischt.

Die dargestellte Wasseraufbereitungsanlage ist lediglich beispielhaft zu verstehen, da es selbstverständlich eine Vielzahl von Möglichkeiten gibt, die verschiedenen Wasserströme in der Wasseraufbereitungsanlage zu führen, zu trennen und zu mischen.

## Patentansprüche

1. Wasseraufbereitungsanlage, insbesondere für ein Schwimmbad, mit einer Reinigungseinheit (07), in der das insbesondere aus einem Schwimmbecken (01) abgezogene Schmutzwasser (03) aufbereitet wird, wobei bei der Aufbereitung in der Reinigungseinheit (07) das Schmutzwasser (03) in gereinigtes Brauchwasser und mit Verunreinigungen aufkonzentriertes Schlammwasser (08) getrennt wird, und mit einer Schlammwasseraufbereitungsanlage (05), in der das Schlammwasser (08) aufbereitet wird, wobei bei der Aufbereitung des Schlammwassers (08) Feststoffe abgefiltert werden und/oder im Schlammwasser (08) gelöste Verunreinigungen entfernt werden und/oder im Schlammwasser (08) enthaltene Biomasse abgetötet wird und/oder das Schlammwasser (08) entsalzt wird und/oder Wasserinhaltsstoffe oxidiert oder reduziert werden,
**dadurch gekennzeichnet,**
**dass** in der Schlammwasseraufbereitungsanlage (05) zumindest eine Elektrolysezelle (14) mit zumindest einer Anode und zumindest einer Katode vorgesehen ist, so dass das Schlammwasser (08) bei Durchleitung durch die Elektrolysezelle (14) und Anlegen einer elektrischen Spannung zwischen Anode und Katode einem Elektrolyseprozess unterworfen werden kann.

2. Wasseraufbereitungsanlage nach Anspruch 1,
**dadurch gekennzeichnet,**
**dass** in der Schlammwasseraufbereitungsanlage (05) der Elektrolysezelle (14) ein Vorfilter (12) zur Abfilterung von Feststoffen vorgeschaltet ist.

3. Wasseraufbereitungsanlage nach Anspruch 2,
**dadurch gekennzeichnet,**
**dass** das gesamte Schlammwasser (08) durch den Vorfilter (12) durchgeleitet wird.

4. Wasseraufbereitungsanlage nach Anspruch 2 oder 3,
**dadurch gekennzeichnet,**
**dass** die im Schlammwasser (08) enthaltenen Feststoffe im Wesentlichen vollständig im Vorfilter (12) abgefiltert werden.

5. Wasseraufbereitungsanlage nach einem der Ansprüche 2 bis 4,
**dadurch gekennzeichnet,**
**dass** der Vorfilter (12) zur Abfilterung von Feststoffen in der Art eines Sandfilters ausgebildet ist.

6. Wasseraufbereitungsanlage nach Anspruch 5,
**dadurch gekennzeichnet,**
**dass** der Sandfilter (12) einen Querschnitt aufweist, so dass bei Durchleitung des gesamten Schlammwassers (08) durch den Sandfilter (12) eine Durchflussgeschwindigkeit von kleiner oder gleich 10m/h, insbesondere von kleiner oder gleich 5m/h eingehalten wird.

7. Wasseraufbereitungsanlage nach einem der Ansprüche 1 bis 6,
**dadurch gekennzeichnet,**
**dass** die Anode in der Art einer Plattenanode und/oder die Katode in der Art einer Plattenkatode ausgebildet ist.

8. Wasseraufbereitungsanlage nach Anspruch 7,
**dadurch gekennzeichnet,**
**dass** die Größe der Elektrodenfläche der Plattenanode und/oder der Plattenkatode auf den Chloridgehalt und/oder den TOC-Gehalt abgestimmt ist, insbesondere ungefähr 1 qm Elektrodenfläche je 20 g Chlor pro Stunde zur Verfügung steht.

9. Wasseraufbereitungsanlage nach Anspruch 7 oder 8,
**dadurch gekennzeichnet,**
**dass** das Schlammwasser (08) die Elektrolysezelle (14) längs spaltförmiger Zwischenräume zwischen den Plattenanoden und Plattenkatoden durchströmt.

10. Wasseraufbereitungsanlage nach einem der Ansprüche 7 bis 9,
**dadurch gekennzeichnet,**
**dass** der Abstand zwischen zueinander benachbarten Plattenanoden und Plattenkatoden kleiner oder gleich 4mm, insbesondere kleiner oder gleich 2mm, ist.

11. Wasseraufbereitungsanlage nach einem der Ansprüche 1 bis 10,
**dadurch gekennzeichnet,**
**dass** die Spannung zwischen Anode und Katode im Bereich zwischen 5 und 20 Volt, insbesondere im Bereich zwischen 8 und 16 Volt, liegt.

12. Wasseraufbereitungsanlage nach einem der Ansprüche 1 bis 11,
**dadurch gekennzeichnet,**
**dass** zur Steuerung und/oder Regelung der Spannung und/oder des Stromes zwischen Anode und Katode ein Steuer- oder Regelgerät vorgesehen ist.

13. Wasseraufbereitungsanlage nach Anspruch 12,
**dadurch gekennzeichnet,**
**dass** die Polung der Spannung zwischen Anode und Katode mit dem Steuer- oder Regelgerät periodisch umgepolt werden kann.

14. Wasseraufbereitungsanlage nach Anspruch 13,
**dadurch gekennzeichnet,**
**dass** die periodische Umpolung mit dem Steuer- oder Regelgerät automatisch erfolgt.

15. Wasseraufbereitungsanlage nach Anspruch 13 oder 14,
**dadurch gekennzeichnet,**
**dass** die Dauer der Phasen zwischen der Umpolung auf die Wasserqualität des Schlammwassers abgestimmt ist, insbesondere ungefähr 5 bis 50 Minuten, insbesondere ungefähr 10 Minuten, beträgt.

16. Wasseraufbereitungsanlage nach einem der Ansprüche 13 bis 15,
**dadurch gekennzeichnet,**
**dass** bei Umpolung der Spannung die Anoden als Katoden und die Katoden als Anoden einsetzbar sind.

17. Wasseraufbereitungsanlage nach Anspruch 16,
**dadurch gekennzeichnet,**
**dass** die Anoden und die Katoden im Wesentlichen baugleich ausgebildet sind.

18. Wasseraufbereitungsanlage nach Anspruch 16 oder 17,
**dadurch gekennzeichnet,**
**dass** die Anoden und die Katoden aus dem gleichen Material hergestellt sind.

19. Wasseraufbereitungsanlage nach einem der Ansprüche 16 bis 18,
**dadurch gekennzeichnet,**
**dass** die Anoden und/oder die Katoden aus Titan hergestellt sind.

20. Wasseraufbereitungsanlage nach einem der Ansprüche 16 bis 19,
**dadurch gekennzeichnet,**
**dass** an den Anoden und Katoden Diamanten, insbesondere Industriediamantpartikel, befestigt, insbesondere eingepresst, sind.

21. Wasseraufbereitungsanlage nach einem der Ansprüche 1 bis 20,
**dadurch gekennzeichnet,**
**dass** das Steuer- und/oder Regelgerät den Elektrolyseprozess in der Elektrolysezelle derart führt, dass Chlor aus im Schlammwasser enthaltenen Chlorverbindungen gebildet wird.

22. Wasseraufbereitungsanlage nach einem der Ansprüche 1 bis 21,
**dadurch gekennzeichnet,**
**dass** das Steuer- und/oder Regelgerät den Elektrolyseprozess in der Elektrolysezelle derart führt, dass Stickstoff aus im Schlammwasser enthaltenen Stickstoffverbindungen gebildet wird.

23. Wasseraufbereitungsanlage nach einem der Ansprüche 1 bis 22,
**dadurch gekennzeichnet,**
**dass** das Steuer- und/oder Regelgerät den Elektrolyseprozess in der Elektrolysezelle derart führt, dass im Schlammwasser enthaltene organische Verbindungen in Kohlendioxid umgesetzt werden.
